# EUROPÄISCHE PATENTANMELDUNG

(11) **EP 4 108 953 A1**
(43) Veröffentlichungstag der Anmeldung: **28.12.2022**
(21) Anmeldenummer: 22174954.2
(22) Anmeldetag: 23.05.2022
(51) Int. Cl.: F16F 7/108, F16F 1/373, F16F 15/08

(54) **SCHWINGUNGSTILGER**

(30) Priorität: 21.06.2021 DE 102021116027
(71) Anmelder: Vibracoustic SE, 64293 Darmstadt (DE)
(72) Erfinder: Myklebust, Erik, 3610 Kongsberg (NO)
(74) Vertreter: Patentanwälte Olbricht Buchhold Keulertz

(57) **Zusammenfassung**

Vorgeschlagen wird ein Schwingungstilger zum Dämpfen von Schwingungen eines Kraftfahrzeugteils, der von einer Quermittelebene (Q) durchsetzt ist, mit einer an dem Kraftfahrzeugteil befestigbaren Haltevorrichtung (4), welche zumindest zwei Aufnahmemittel (5) aufweist, welche jeweils eine der Quermittelebene (Q) zugewandte Innenseite (40) und eine der Quermittelebene (Q) abgewandte Außenseite (42) aufweisen, einer Tilgermasse (6), die zentral von einer Längsachse (A) durchsetzt ist, und zumindest zwei Elastomerfedern (8), wobei die Elastomerfedern (8) die Tilgermasse (6) schwingfähig an die Aufnahmemittel (5) koppeln, wobei zumindest eine der Elastomerfedern (8) einen Verbindungsabschnitt (12) zwischen Tilgermasse (6) und jeweiligem Aufnahmemittel (5) aufweist, der zumindest überwiegend außenseitig bezüglich des jeweiligen Aufnahmemittels (5) verläuft.

## Beschreibung

Die Erfindung betrifft einen Schwingungstilger gemäß dem Oberbegriff von Anspruch 1.

Bekannte Schwingungstilger zum Dämpfen von Schwingungen eines Kraftfahrzeugteils umfassen üblicherweise eine an dem Kraftfahrzeugteil befestigbare Haltevorrichtung, eine Tilgermasse, die schwingfähig gegenüber der Haltevorrichtung gelagert ist, und eine Federvorrichtung, welche die Tilgermasse schwingfähig an die Haltevorrichtung koppelt.

Schwingungstilger der eingangs genannten Art werden zur Bedämpfung der Schwingungen von Kraftfahrzeugteilen eingesetzt, um die störenden Schwingungen vom Fahrgastraum zu entkoppeln und so den Fahrkomfort zu verbessern. Herkömmliche Schwingungstilger weisen eine Federvorrichtung und eine Tilgermasse auf, die über die Federmasse an das zu bedämpfende Kraftfahrzeugteil schwingfähig gekoppelt ist. Fängt das mit dem Schwingungstilger verbundene Kraftfahrzeugteil zu schwingen an, schwingt die Tilgermasse mit einer gewissen Verzögerung mit, wobei eine Bedämpfung der Schwingungen über die Federvorrichtung erfolgt. Ein derartiger Schwingungstilger wird beispielsweise zum Bedämpfen von Schwingungen im Bereich einer Heckklappe, eines Fahrzeugsitzes oder eines Daches eines Kraftfahrzeugs eingesetzt.

Ein solcher Schwingungstilger ist beispielsweise aus der DE 102016115782 B4 bekannt. Bei diesem weist die Tilgermasse zu jeder Stirnseite ein separates Stiftelement auf. Das Stiftelement ist einends über einen Befestigungsabschnitt mit der Tilgermasse verbunden und ragt anderenends tief in einen hohlzylindrischen Abschnitt einer verbindenden Elastomerfeder hinein. Das Stiftelement durchragt zudem eine Anschlageinrichtung, die als Aufnahmeauge ausgebildet ist, um eine Auslenkung der Tilgermasse relativ zu der Haltevorrichtung zu begrenzen. Jedoch ist ein solcher Schwingungstilger aufgrund der Bauteilanzahl und gegebenenfalls nötiger spezieller Montagewerkzeuge kostenintensiv in der Herstellung, bedarf einer genauen vordefinierten Vorspannung und nimmt zumindest in Längsrichtung einen großen Bauraum in Anspruch.

Aufgabe der Erfindung ist es daher, einen Schwingungstilger zu schaffen, welcher die genannten Probleme des Standes der Technik überwindet.

Hauptmerkmale der Erfindung sind im kennzeichnenden Teil von Anspruch 1 angegeben. Ausgestaltungen sind Gegenstand der Ansprüche 2 bis 11.

Erfindungsgemäß wird daher ein Schwingungstilger vorgeschlagen zum Dämpfen von Schwingungen eines Kraftfahrzeugteils, der von einer Quermittelebene durchsetzt ist, mit einer an dem Kraftfahrzeugteil befestigbaren Haltevorrichtung, welche zumindest zwei Aufnahmemittel aufweist, welche jeweils eine der Quermittelebene zugewandte Innenseite und eine der Quermittelebene abgewandte Außenseite aufweisen, einer Tilgermasse, die zentral von einer Längsachse durchsetzt ist, und zumindest zwei Elastomerfedern, wobei die Elastomerfedern die Tilgermasse schwingfähig an die Aufnahmemittel koppeln, wobei zumindest eine der Elastomerfedern einen Verbindungsabschnitt zwischen Tilgermasse und jeweiligem Aufnahmemittel aufweist, der zumindest überwiegend außenseitig bezüglich des jeweiligen Aufnahmemittels verläuft.

Der Verbindungsabschnitt kann vorzugsweise auch vollständig außenseitig bezüglich des jeweiligen Aufnahmemittels bzw. dessen Außenseite verlaufen. Der Verbindungsabschnitt verläuft unmittelbar zwischen Tilgermasse und jeweiligem Aufnahmemittel ohne Zwischenschaltung eines Stiftelements. Die Tilgermasse ist daher unmittelbar an der Haltevorrichtung gelagert. Zudem ist dieser Verbindungsabschnitt nunmehr nicht im Zwischenraum beider Haltevorrichtungen angeordnet, sondern zumindest abschnittsweise auf der Außenseite. In diesem Fall kann nämlich auf ein bislang notwendiges zusätzliches Stiftelement dadurch verzichtet werden, dass die Tilgermasse selbst als Auslenkungs- oder Wegbegrenzungseinrichtung agiert.

Auch bezüglich der Verortung der Dämpfungswirkung weist die Erfindung erhebliche Unterschiede zu bekannten Ausgestaltungen auf. Die Steifigkeit eines Schwingungstilgers wird weitgehend von der konstruktiven Ausgestaltung und Verortung der Elastomerfedern bestimmt. Bislang ergibt sich eine Dämpfungswirkung oder ein Großteil der Federsteifigkeit aus einem Elastomerfederabschnitt, der im Zwischenraum beider Haltevorrichtungen platziert ist. Die jeweiligen Anbindungen der Elastomerfedern an die Tilgermasse oder das Stiftelement liegen somit in Längsrichtung nah zusammen, was zu großen kardanischen Auslenkungen und zu großen Anschlagskräften führen kann. Bei der Erfindung jedoch entsteht die Dämpfungswirkung oder ein Großteil der Federsteifigkeit im Verbindungsabschnitt, der außenseitig bezüglich des jeweiligen Aufnahmemittels angeordnet ist. Dadurch ist auch das Kardanikverhalten verbessert.

Aufgrund des Verzichts auf ein Stiftelement kann der Schwingungstilger zudem in Längsrichtung kürzer bauen. Die Tilgermasse als solche kann zudem eine sehr einfache Geometrie aufweisen. Bislang waren beispielsweise Bohrungen in der Tilgermasse nötig, um das Stiftelement darin zu befestigen. Die Tilgermasse kann beispielsweise die Form eines Zylinders mit gleichbleibendem Durchmesser entlang der Längsachse und vorzugsweise mit ebenen Stirnseiten aufweisen, oder aber auch querschnittlich polygonal ausgestaltet sein, vorzugsweise als Quader mit vorzugsweise ebenen Stirnseiten.

Darüber hinaus ist der erfindungsgemäße Schwingungstilger einfach und kostengünstig herstellbar, da die Elastomerfedern separat zu der Tilgermasse und der Haltevorrichtung herstellgestellt werden können. Folglich kann ein Baukastensystem generiert werden, welches sich mit unterschiedlichen Tilgermassen und/oder Haltevorrichtungen kombinieren lässt. Ferner kann über die Härte der Elastomerfedern und/oder die Gestaltung deren Geometrie die Schwingfrequenz des Schwingungstilgers eingestellt werden.

Somit werden die von dem Kraftfahrzeugteil resultierenden Schwingungen wirksam bedämpft, so dass der Fahrkomfort erhöht wird.

Die Elastomerfedern können formschlüssig, kraftschlüssig und/oder stoffschlüssig mit der Tilgermasse und der jeweiligen Haltevorrichtung verbunden sein. Jedem Aufnahmemittel kann eine der Elastomerfedern zugeordnet sein. Jedes Aufnahmemittel kann plattenartig und/oder ringförmig ausgestaltet sein und/oder parallel zur Quermittelebene verlaufen, wobei dieses plattenartige und/oder ringförmige Aufnahmemittel die Innenseite und Außenseite aufweisen kann.

Gemäß einer denkbaren Weiterbildung des Schwingungstilgers kann die Tilgermasse die Form eines Zylinders mit gleichbleibendem Durchmesser entlang der Längsachse und vorzugsweise mit ebenen Stirnseiten aufweisen. Die Tilgermasse kann jedoch aber auch querschnittlich polygonal ausgestaltet sein, vorzugsweise die Form eines Quaders mit vorzugsweise ebenen Stirnseiten haben. Die Stirnseiten weisen in Längsrichtung. Die Tilgermasse kann monolithisch ausgebildet bzw. aus einem einzigen Stück gebildet sein.

Gemäß einer denkbaren Weiterbildung des Schwingungstilgers kann der jeweilige Verbindungsabschnitt die Tilgermasse umfangsseitig umgeben. Vorzugsweise kann zumindest die Tilgermasse zwischen ihrer Stirnseite und dem Aufnahmemittel von dem Verbindungsabschnitt überdeckt sein. Der jeweilige Verbindungsabschnitt kann hohlzylindrisch ausgestaltet sein.

Gemäß einer Weiterbildung des Schwingungstilgers können die Aufnahmemittel jeweils als Aufnahmeauge ausgebildet sein, wobei vorzugsweise die Tilgermasse zumindest eines der Aufnahmeaugen, vorzugsweise beide, in Längsrichtung unter Ausbildung einer Radialdistanz durchragen kann. Die Außenseite und Innenseite kann sich dann auf das Aufnahmeauge beziehen. Somit kann sich der Verbindungsabschnitt der jeweiligen Elastomerfeder zumindest abschnittsweise außenseitig des jeweiligen Aufnahmeauges erstrecken. Die Radialdistanz kann umfangsseitig sein. Um die Tilgermasse herum kann im Aufnahmeauge ein tilgermasseumgebender Freiraum ausgebildet sein, beispielsweise ein Kreisringfreiraum bei einer querschnittlich kreisrunden Tilgermasse und einem querschnittlich kreisrunden Aufnahmeauge. Auch dadurch ist eine Wegbegrenzungseinrichtung ausgebildet, die eine Überlastung der Elastomerfedern verhindert, indem sie die Auslenkung der Tilgermasse relativ zu der Haltevorrichtung begrenzt. Die Tilgermasse kann nämlich sodann selbst als Radialbegrenzung wirken. Insbesondere bewirkt die diese Ausgestaltung, dass sich die Tilgermasse nur innerhalb vorgegebener Wege zur Bedämpfung der Schwingungen frei bewegen kann, ohne dabei die Elastomerfedern zu stark zu beanspruchen oder zu beschädigen. Das Aufnahmeauge kann zur Tilgermasse koaxial ausgerichtet sein. Dadurch, dass nun die Tilgermasse selbst die Aufnahmeaugen durchragt, anstelle des bislang verwendeten Stiftelements, ist mit der Umfangsfläche der Tilgermasse ein großer Bereich für die Auslenkungsbegrenzung geschaffen zur Verbesserung der Haltbarkeit im Vergleich zum kleinen Stiftelement.

Gemäß einer denkbaren Weiterbildung des Schwingungstilgers können die Aufnahmeaugen größer sein als die Tilgermasse an ihrer größten Querschnittserstreckung.

Gemäß einer denkbaren Weiterbildung des Schwingungstilgers kann zumindest ein Aufnahmeauge querschnittlich kreisrund sein. Vorzugsweise ist die Tilgermasse im das Aufnahmeauge durchragenden Abschnitt ebenfalls querschnittlich kreisrund. Alternativ kann zumindest ein Aufnahmeauge querschnittlich mehreckig sein. Vorzugsweise ist die Tilgermasse im das Aufnahmeauge durchragenden Abschnitt ebenfalls querschnittlich mehreckig. Die jeweiligen Ecken von Tilgermasse und Aufnahmeauge können auf einer Zentralen liegen, die die Längsachse schneidet. Die Zentrale kann parallel zur Quermittelebene verlaufen. Ein gedachter Querschnittskreis, dessen Zentrum auf der Längsachse liegen kann und auf dem die Ecken der Tilgermasse im Bereich des jeweiligen Aufnahmeauges liegen, kann größer sein als der kleinste gedachte Querschnittskreis, der in das jeweilige Aufnahmeauge passt, wobei die beiden Querschnittskreise konzentrisch sein können. Dadurch ist eine Verdrehsicherung um die Längsachse realisierbar.

Gemäß einer Weiterbildung des Schwingungstilgers kann jede Elastomerfeder einen Stirnseitenabschnitt zum Anlegen an eine Stirnseite der Tilgermasse und den davon in Richtung der Quermittelebene abragenden Verbindungsabschnitt zum Koppeln mit dem jeweiligen Aufnahmemittel aufweisen. Die Elastomerfedern versteifen somit den Schwingungstilger auch in Längsrichtung, da deren Stirnseitenabschnitt an der Stirnseite der Tilgermasse anliegt. Die Stirnseitenabschnitte fixieren die Tilgermasse in Längsrichtung. Zudem kann der Stirnseitenabschnitt puffernd mit einem Axialanschlagselement, beispielsweise einer Axialanschlagslippe, zusammenwirken, um eine axiale Auslenkung zu begrenzen.

Gemäß einer Weiterbildung des Schwingungstilgers kann jede Elastomerfeder einen Umfangsseitenabschnitt aufweisen, der in Radialrichtung umgebend zur Tilgermasse angeordnet und/oder mit dieser verbunden ist. Der Umfangsseitenabschnitt kann der Umfangsfläche der Tilgermasse folgen, beispielsweise ringförmig sein und unmittelbar am Außenumfang der Tilgermasse anliegend oder dort verbunden sein. Die Umfangsseitenabschnitte fixieren die Tilgermasse in Quer- bzw. Radialrichtung. Die Tilgermasse ist somit auch umfangsseitig gesichert, wobei eine solche Ausgestaltung mit einem stirnseitigen Stiftelement bislang nicht möglich war. Die Verbindung zwischen Umfangsseitenabschnitt und Tilgermasse kann eine formschlüssige, kraftschlüssige und/oder stoffschlüssige Verbindung sein, vorzugsweise eine Presspassung. Auch dadurch, dass die Tilgermasse auch umfangsseitig an den Elastomerfedern gelagert ist, kann der Schwingungstilger in Längsrichtung kürzer bauen. Der Umfangsseitenabschnitt kann unmittelbar an den Stirnseitenabschnitt angrenzen. Der Umfangsseitenabschnitt kann ein Abschnitt des Verbindungsabschnitts sein. Die Elastomerfeder kann mittels Stirnseitenabschnitt und Umfangsseitenabschnitt die Tilgermasse kappenartig übergreifen.

Gemäß einer denkbaren Weiterbildung des Schwingungstilgers kann die Tilgermasse an ihren jeweiligen Längsenden außenseitig der Außenseite des jeweiligen Aufnahmemittels vollständig stirnseitig und/oder umfangsseitig von der Elastomerfeder überdeckt sein.

Gemäß einer Weiterbildung des Schwingungstilgers kann der Verbindungsabschnitt zumindest abschnittsweise einen sich in Richtung Außenseite des jeweiligen Aufnahmemittels vergrößernden Innendurchmesser aufweisen. Der Abschnitt des Verbindungsabschnitts mit sich vergrößerndem Innendurchmesser kann auch als Radialdistanzierungsabschnitt bezeichnet werden da sich die jeweilige Elastomerfeder in Radialrichtung zunehmend von der Tilgermasse distanziert. In gleichem Maße kann sich auch der entsprechende Außendurchmesser des Verbindungsabschnitts ändern. So ist eine konstante Wandungsstärke realisierbar. Der Innendurchmesser vergrößernde Abschnitt kann verkippt oder gewölbt zur Umfangsfläche der Tilgermasse verlaufen. Ein verkippter Verlauf bildet beispielsweise einen Konusabschnitt aus.

Gemäß einer Weiterbildung des Schwingungstilgers kann der Verbindungsabschnitt ein Kopplungsmittel, vorzugsweise eine Umfangsnut, zur Kopplung an das jeweilige Aufnahmemittel aufweisen, wobei vorzugsweise das Kopplungsmittel in Radialrichtung zwischen dem Aufnahmemittel und der Tilgermasse angeordnet ist. Der Abschnitt der Elastomerfeder innenumfangsseitig der Umfangsnut bildet einen elastomeren Radialanschlag für die Tilgermasse aus. Das Kopplungsmittel kann die Umfangsnut oder ein Umfangsflansch sein, wobei das jeweilige Aufnahmemittel das jeweils andere Element zur Kopplung umfassen kann.

Gemäß einer Weiterbildung des Schwingungstilgers kann jede Elastomerfeder einen ersten Flansch aufweisen, an dem das jeweilige Aufnahmemittel anliegen kann, wobei vorzugsweise der erste Flansch eine sich in Richtung der Quermittelebene durchmesservergrößernde Seitenwand aufweisen kann und das jeweilige Aufnahmemittel im an der Seitenwand anliegenden Anlagebereich eine korrespondierende Kontur aufweisen kann. Der erste Flansch kann ein Ringflansch sein. Der erste Flansch kann außenumfangsseitig verlaufen. Eine derart ausgestaltete Seitenwand kann bei einer Axialverstellung der Tilgermasse die Elastomerfeder derart Verformen, dass der erste Flansch nach radial innen gebogen wird, wo er einen Radialanschlag ausbildet und einen radialen Ausschlagweg reduziert.

Gemäß einer Weiterbildung des Schwingungstilgers kann der erste Flansch einen außenumfangsseitigen Flachabschnitt aufweisen, der eine Radialerstreckung des ersten Flansches gegenüber umfangsseitig benachbarten Abschnitten des ersten Flansches reduziert. Der Flachabschnitt reduziert die radiale Bauhöhe des ersten Flansches. Dadurch ist die Elastomerfeder näher an eine Tragplatte rückbar, wodurch weniger Bauraum benötigt wird. Es kann somit eine radial kompaktere Bauweise realisiert werden. Der Flachabschnitt kann eben sein.

Gemäß einer Weiterbildung des Schwingungstilgers kann jede Elastomerfeder einen zweiten Flansch aufweisen, an dem das jeweilige Aufnahmemittel anliegen kann, wobei der zweite Flansch eine in Radialrichtung verlaufende Seitenwand aufweisen kann, gegen welche sich das Aufnahmemittel in Längsrichtung abstützt. Der zweite Flansch kann ein Ringflansch sein. Der zweite Flansch kann außenumfangsseitig verlaufen. Eine derart ausgestaltete Seitenwand kann bei einer Axialverstellung der Tilgermasse als Axialanschlag dienen. Die Seitenwand kann parallel zur Quermittelebene verlaufen.

Gemäß einer denkbaren Weiterbildung des Schwingungstilgers kann die Umfangsnut von dem ersten und/oder zweiten Flansch ausgebildet und/oder in Längsrichtung begrenzt sein.

Gemäß einer Weiterbildung des Schwingungstilgers kann die Haltevorrichtung
- keine die Aufnahmemittel miteinander verbindende Struktur umfassen oder
- eine Tragplatte aufweisen, welche die Aufnahmemittel miteinander verbinden kann, wobei die Tragplatte entweder integral mit den Aufnahmemitteln ausgebildet oder separat ausgebildet und mit diesen verbunden sein kann, vorzugsweise mittels zumindest einer Form- und/oder Presspassung, oder
- zumindest ein Seil aufweisen, welches die Aufnahmemittel miteinander verspannen kann.

Bei der ersten Alternative sind die beiden Aufnahmemittel jeweils separat ausgebildet und nicht (direkt) miteinander über eine Struktur verbunden, abgesehen beispielsweise von der indirekten Verbindung mittels der Tilgermasse, die von beiden getragen ist. Dies ist gerade bei der Vormontage von Vorteil, da die Aufnahmemittel in Längsrichtung unter Zwischenbindung der Elastomerfedern an der Tilgermasse angeordnet werden können. Zudem können die Aufnahmemittel Teil oder Abschnitt eines einfachen L-Winkels sein, welche ebenfalls kostengünstig herstellbar sind, wobei die Abschnitte des L-Winkels als Grundstrich und Arm bezeichenbar sein.

Bei der zweiten Alternative kann eine integrale oder zu den Aufnahmemitteln separate Tragplatte vorgesehen sein. Bei der integralen Ausführung können die beiden Aufnahmemittel und die Tragplatte monolithisch bzw. einstückig ausgebildet sein. Bei der separaten Ausführung liegen drei Bauteile vor, welche geeignet miteinander verbunden werden können, beispielsweise mittels Verschraubung oder Verklemmung. Mittels Tragplatte kann ein definierter Druck auf den Elastomerfedern gehalten werden und zwar bereits während der Vormontage. Die Tragplatte kann bereits im Zustand der Vormontage die Teile des Schwingungstilgers zusammenzuhalten - insbesondere während eines nachfolgenden Transports zur endgültigen Montage am Kraftfahrzeugteil. Auch hier ist die Vormontage denkbar einfach. Gleichsam wie bei der ersten Alternative können bei der separaten Ausführung die Aufnahmemittel in Längsrichtung unter Zwischenbindung der Elastomerfedern an der Tilgermasse angeordnet werden und anschließend mittels Tragplatte verbunden werden. Dies ermöglicht einen nah an der Tilgermasse angeordneten Axialbegrenzer oder eine Axialanschlagslippe, da keine großen Dehnungen der Elastomerfedern bei der Vormontage oder Montage erforderlich sind.

Bei der dritten Alternative kann ein Seil vorgesehen sein, wobei darunter ebenso ein Draht verstanden werden soll. Das Seil kann eines ohne oder mit geringen elastischen Anteilen sein. Das Seil kann ein Ringseil sein und die beiden Aufnahmemittel miteinander verspannen. Dies ist ganz besonders für den Vormontagezustand, einen Transport und die schnelle Montage vorteilhaft. Das Seil kann an einem Aufnahmemittel eingehängt und dann zu dem anderen Aufnahmemittel geführt werden. Das Seil wird von dort aus gekreuzt wieder zurück zum anderen Aufnahmemittel geführt und dort eingehängt. Das Seil erzeugt gemeinsam mit den Elastomerfedern eine Vorspannung. Das Seil selbst stellt keine Verdrehsicherung für die Tilgermasse um die Längsachse dar. Jedoch ist dies bei einer Tilgermasse mit eigener Verdrehsicherung lediglich nachrangig, da die querschnittlich polygonale Form der Tilgermasse mit dem/den entsprechenden Aufnahmemittel(n) selbst eine Verdrehsicherung ausbilden kann.

Gemäß einer denkbaren Weiterbildung des Schwingungstilgers kann die separate Tragplatte zumindest eine Klemmlasche aufweisen, welche sich in Längs- oder Querrichtung erstreckt. Die Klemmlasche kann mit einem Aufnahmemittel oder einem daran angeordneten Schenkel verklemmen, vorzugsweise mit einer Klemmbrücke. Vorzugsweise weist die separate Tragplatte zwei sich in Querrichtung bezüglich der Längsachse erstreckende Klemmlaschen auf, wobei jeweils eine der Klemmlaschen mit einem Aufnahmemittel oder einem daran angeordneten Schenkel verklemmt. Bevorzugt weisen alle Klemmlaschen in die gleiche Richtung. Dadurch kann eine einfache und schnelle Vormontage des Schwingungstilgers erfolgen. Die Klemmlasche kann einen Schenkel verklemmen oder dort bei Vormonate oder Montage eine Vorspannung einbringen, insbesondere wenn der Schenkel im Zustand vor Vormontage um einen Winkel verkippt ist.

Gemäß einer denkbaren Weiterbildung des Schwingungstilgers kann die separate Tragplatte zumindest eine Rastnase aufweisen, welche sich in Längs- oder Querrichtung erstreckt. Die Rastnase kann mit einer Rastausnehmung eines Aufnahmemittels oder eines daran angeordneten Schenkels verrasten. Vorzugsweise weist die separate Tragplatte zwei sich in Querrichtung bezüglich der Längsachse erstreckende Rastnasen auf, wobei jeweils eine der Rastnasen mit einem Aufnahmemittel oder einem daran angeordneten Schenkel verrastet. Dadurch kann eine einfache und schnelle Vormontage des Schwingungstilgers erfolgen. Die Rastnasen können mit jeweiligen Rastausnehmungen am verrasten. Denkbar ist auch, dass die separate Tragplatte die Rastausnehmung aufweist und das Aufnahmemittel oder der daran angeordnete Schenkel die korrespondierende Rastnase aufweist. Die Rastnase kann als Axialbegrenzung zur Verhinderung des axialen Verschiebens des jeweiligen Aufnahmemittels oder eines daran angeordneten Schenkels dienen.

Gemäß einer Weiterbildung des Schwingungstilgers kann zumindest an einem der Aufnahmemittel ein in Längsrichtung abragender Schenkel angeordnet sein, der
- gegenüber der Längsachse um einen Winkel verkippt verläuft und/oder
- eine vom jeweiligen Schenkel abragende Axialanschlagslippe aufweist und/oder
- zumindest eine Klemmausnehmung zum Einführen einer Klemmlasche aufweist und/oder
- zumindest eine Rastausnehmung zum Aufnehmen einer Rastnase aufweist.

Grundsätzlich können die Schenkel zur Verbindung mit dem Kraftfahrzeugteil dienen. Der Schenkel kann der Arm des L-Winkels sein. Bezüglich der ersten Ausführung kann der Winkel bzw. der eingeschlossene Winkel im Bereich zwischen 1° und 20°, vorzugsweise zwischen 5° und 15°, bevorzugt 10° betragen. Der Winkel kann im unbelasteten Zustand oder Zustand vor Vormontage vorliegen. Ein Winkel im Bereich von 89° bis 70°, vorzugsweise zwischen 85° und 75°, bevorzugt 80° kann alternativ oder zusätzlich bei einem L-Winkel zwischen dem Grundstrich-Abschnitt und Arm-Abschnitt aufgespannt sein. Ein Verbinden der Schenkel mit dem Kraftfahrzeugteil führt dazu, dass die Aufnahmemittel verbogen werden können und so eine Vorspannung in den Schwingungstilger eingebracht werden kann.

Bezüglich der zweiten Ausführung kann sich die Axialanschlagslippe in Richtung der Längsachse erstrecken, vorzugsweise parallel zu Quermittelebene. An die Axialanschlagslippe kann die Tilgermasse bei großen Auslenkungen in Längsrichtung anschlagen, wobei hier ein elastomerer Stirnseitenabschnitt zur Dämpfung von Vorteil ist. Die Axialanschlagslippe kann mit dem jeweiligen Schenkel monolithisch ausgebildet sein, vorzugsweise ausgestanzt.

Bezüglich der dritten Ausführung kann sich die zumindest eine Klemmausnehmung in Querrichtung erstrecken. Vorzugsweise weist jeder Schenkel eine sich in die Querrichtung bezüglich der Längsachse erstreckende Klemmausnehmung auf, wobei jeweils eine der Klemmlaschen in einer jeweiligen Klemmausnehmung aufnehmbar ist. Vorteilhaft sind jeweils zwei sich in Querrichtung bezüglich der Längsachse erstreckende Klemmausnehmung an jedem Aufnahmemittel oder einem daran angeordneten Schenkel. Die beiden Klemmausnehmung eines Aufnahmemittels oder eines daran angeordneten Schenkels können miteinander fluchten und/oder durch eine Klemmbrücke getrennt sein. Die Klemmbrücke kann von dem jeweiligen Aufnahmemittel oder vom daran angeordneten Schenkel ausgebildet sein. An der Klemmbrücke kann die Klemmlasche klemmend anliegen.

Bezüglich der vierten Ausführung kann zumindest ein Schenkel eine Rastausnehmung für eine Rastnase aufweisen, wobei sich die Rastausnehmung in Längs- oder Querrichtung erstrecken kann. Vorzugsweise weist jedes der beiden Aufnahmemittel oder der daran angeordneten Schenkel eine sich in die Querrichtung bezüglich der Längsachse erstreckende Rastausnehmung auf, wobei jeweils eine der Rastausnehmung mit der Tragplatte verklemmen kann. Dadurch kann eine einfache und schnelle Vormontage des Schwingungstilgers erfolgen. Denkbar ist auch, dass die separate Tragplatte die Rastausnehmung aufweist und das Aufnahmemittel oder der daran angeordnete Schenkel die korrespondierende Rastnase aufweist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine perspektivische Ansicht eines Schwingungstilgers erster Ausführungsform,
Fig. 2 eine Längsschnittansicht durch den Schwingungstilger nach Fig. 1,
Fig. 3 eine perspektivische Ansicht einer Haltevorrichtung nach Fig. 1,
Fig. 4 eine perspektivische Ansicht einer Elastomerfeder nach Fig. 1,
Fig. 5 eine Detailansicht aus Fig. 2,
Fig. 6 eine perspektivische Ansicht eines Schwingungstilgers zweiter Ausführungsform,
Fig. 7 eine Längsschnittansicht durch den Schwingungstilger nach Fig. 6,
Fig. 8 eine perspektivische Ansicht einer Haltevorrichtung nach Fig. 6,
Fig. 9 eine weitere perspektivische Ansicht der Haltevorrichtung nach Fig. 6,
Fig. 10 eine perspektivische Ansicht einer Tragplatte nach Fig. 6,
Fig. 11 eine perspektivische Ansicht einer Elastomerfeder nach Fig. 6,
Fig. 12 eine Detailansicht aus Fig. 7,
Fig. 13 eine perspektivische Ansicht eines Schwingungstilgers dritter Ausführungsform,
Fig. 14 eine Längsschnittansicht durch den Schwingungstilger nach Fig. 13,
Fig. 15eine perspektivische Ansicht einer Haltevorrichtung nach Fig. 13,
Fig. 16 eine perspektivische Ansicht einer Elastomerfeder nach Fig. 13 und
Fig. 17eine Detailansicht aus Fig. 14.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

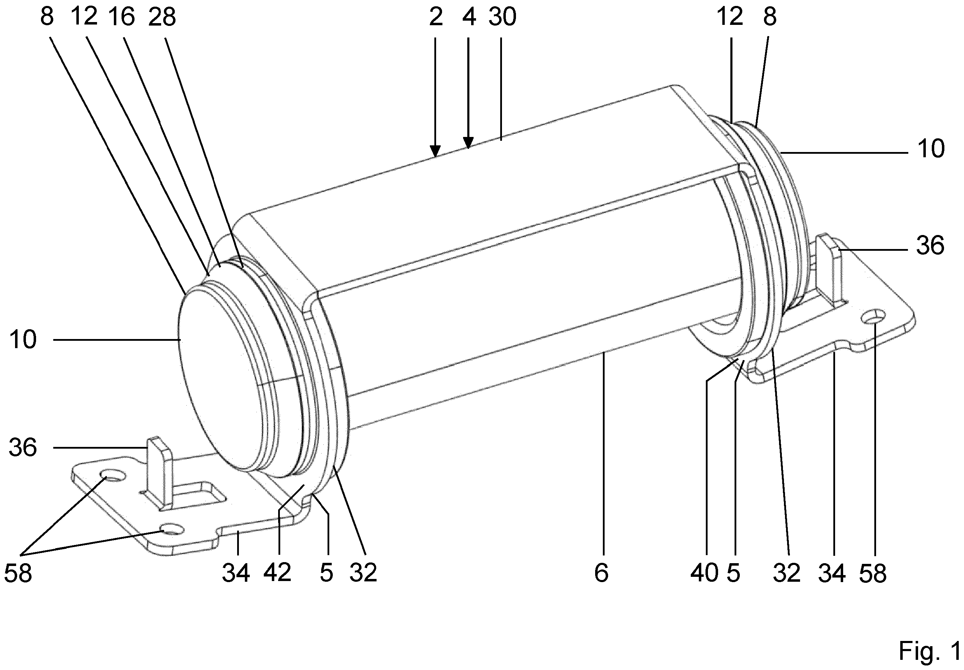

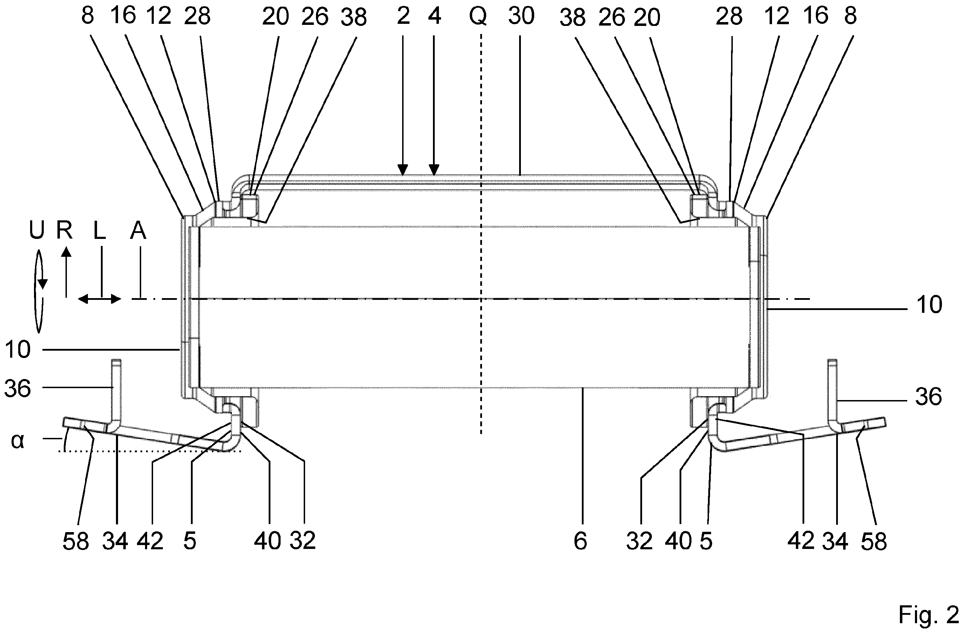

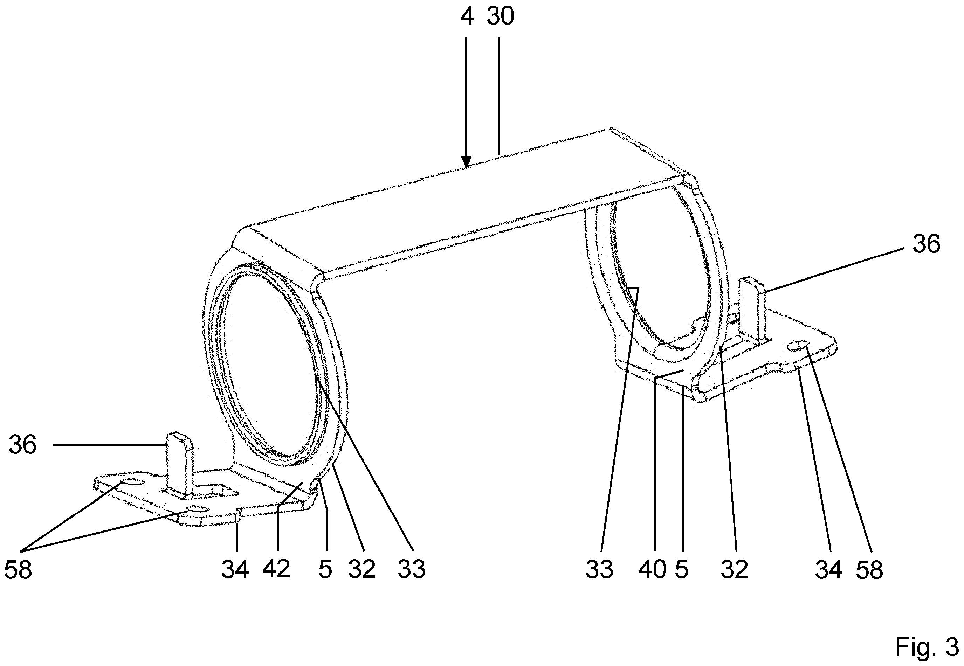

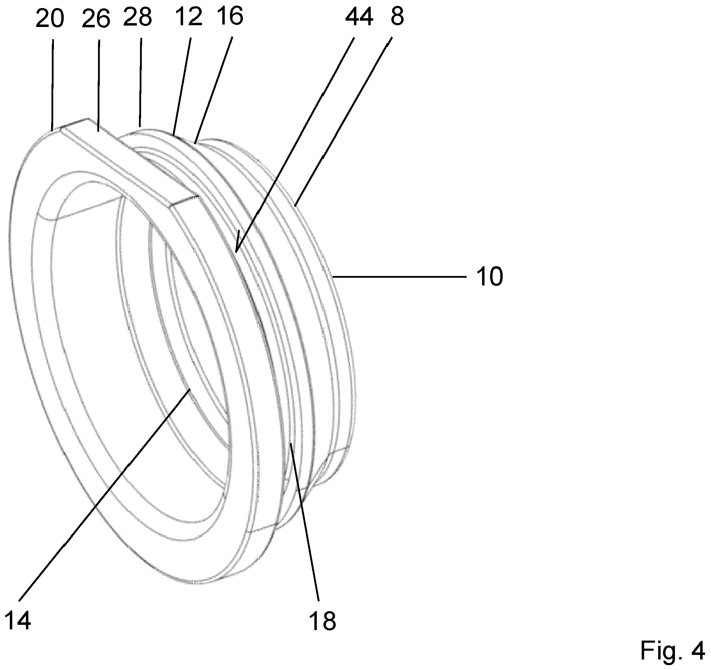

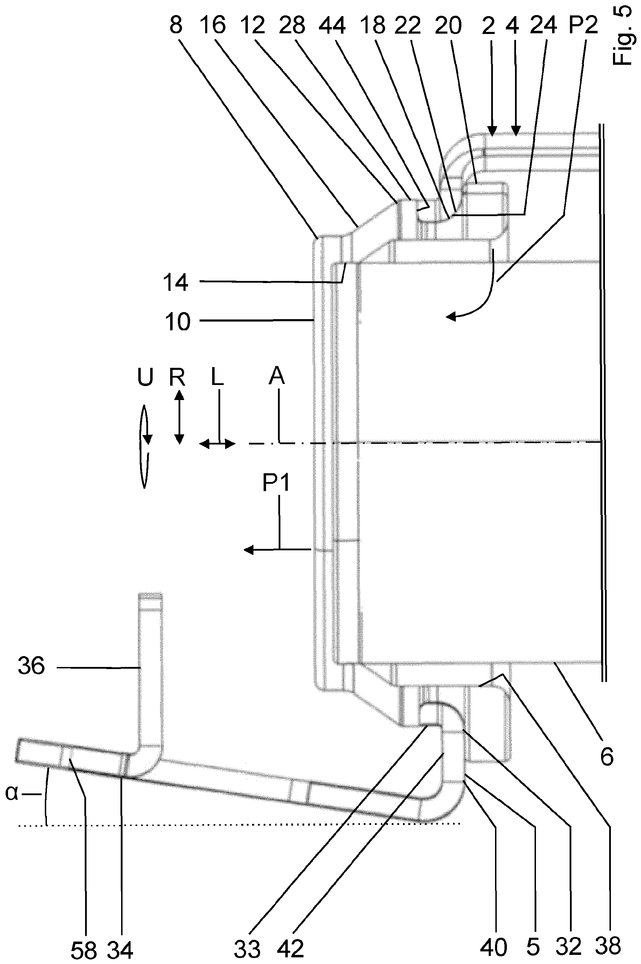

In den Fig. 1 bis 5 ist ein Schwingungstilger 2 im Vormontagezustand und dessen Bauteile gemäß einer ersten Ausführungsform gezeigt. Der Schwingungstilger 2 dient der zur Dämpfung von Schwingungen eines nicht dargestellten Kraftfahrzeugteils, insbesondere einer Heckklappe oder eines Daches eines Kraftfahrzeugs.

Der Schwingungstilger 2 ist von einer Quermittelebene Q durchsetzt und umfasst eine an dem Kraftfahrzeugteil befestigbare Haltevorrichtung 4. Die Haltevorrichtung 4 weist zwei plattenartige und ringförmige Aufnahmemittel 5 auf, welche als Aufnahmeauge 32 ausgebildet sind. Jedes Aufnahmemittel 5 ist eigenständiger Abschnitt eines L-Winkels, wobei der Grundstrich (gemäß Typografie) des L das Aufnahmeauge 32 mit querschnittlich kreisrunder Aufnahmeaugeausnehmung ausbildet und der Arm (gemäß Typografie) des L einen in Längsrichtung vom Aufnahmemittel 5 abragenden Schenkel 34 ausbildet. Jedes Aufnahmeauge 32 umfasst einen sich in Längsrichtung L erstreckenden Ringabschnitt 33, der eine große Anlagefläche zur Elastomerfeder 8 gewährleistet. Jeder Schenkel 34 weist zwei Bohrungen 58 zum Hindurchführen eines Befestigungselements, beispielsweise einer Schraube auf. Jeder Schenkel 34 weist zudem eine Axialanschlagslippe 36 auf, die sich in Richtung einer Längsachse A erstreckt. Jeder Schenkel 34 ist gegenüber der Längsachse A um einen Winkel α verkippt. Jedes der Aufnahmemittel 5 weist eine der Quermittelebene Q zugewandte Innenseite 40 und eine der Quermittelebene Q abgewandte Außenseite 42 auf.

Die beiden Aufnahmemittel 5 sind mittels einer integralen Tragplatte 30 direkt verbunden. Die beiden Aufnahmemittel 5 und die Tragplatte 30 sind aus einem Stück gefertigt bzw. monolithisch ausgeführt. Gleiches gilt für die Schenkel 34.

Der Schwingungstilger 2 umfasst zudem eine monolithische Tilgermasse 6, die zentral von der Längsachse A durchsetzt ist. Die Tilgermasse 6 weist die Form eines Zylinders mit gleichbleibendem Durchmesser entlang der Längsachse A auf. Zudem weist die Tilgermasse 6 ebene Stirnseiten auf. Die Tilgermasse 6 durchragt beide Aufnahmeaugen 32 unter jeweiliger Ausbildung einer die Tilgermasse 6 in Umfangsrichtung U umgebenden Radialdistanz oder eines Freiraums 38, der in diesem Fall ein Kreisringfreiraum ist. Innerhalb der Aufnahmeaugen 32 kann sich die Tilgermasse 6 in Radialrichtung R frei auslenken. Die Aufnahmeaugen 32 sind zur Tilgermasse koaxial ausgerichtet. Erkennbar ist zudem, dass die Aufnahmeaugen 32 größer sind oder einen größeren Innendurchmesser aufweisen als die Tilgermasse 6 an ihrer größten Querschnittserstreckung.

Der Schwingungstilger 2 umfasst zudem zwei Elastomerfedern 8, wobei die Elastomerfedern 8 die Tilgermasse 6 schwingfähig an die Aufnahmemittel 5 koppeln. Jedem Aufnahmemittel 5 ist eine der Elastomerfedern 8 zugeordnet. Jede Elastomerfeder 8 weist einen Stirnseitenabschnitt 10 auf, der entsprechend der Querschnittsform der Tilgermasse 6 ausgebildet ist, also kreisrund. Der Stirnseitenabschnitt 10 liegt an der Stirnseite der Tilgermasse 6 an. An den Stirnseitenabschnitt 10 schließt sich ein Umfangsseitenabschnitt 14 an, der in Radialrichtung R umgebend zur Tilgermasse 6 angeordnet ist. Der Umfangsseitenabschnitt 14 folgt in Umfangsrichtung U der Umfangsfläche der Tilgermasse 6 - er ist also kreisringförmig. Die Umfangsseitenabschnitte 14 fixieren die Tilgermasse 6 in Quer- bzw. Radialrichtung R. Jede Elastomerfeder 8 ist mittels Stirnseitenabschnitt 10 und Umfangsseitenabschnitt 14 auf die Tilgermasse aufgepresst. Die Elastomerfedern 8 übergreifen somit mittels Stirnseitenabschnitt 10 und Umfangsseitenabschnitt 14 die Tilgermasse 6 kappenartig. Jede der Elastomerfedern 8 umfasst zudem einen Verbindungsabschnitt 12 zwischen Tilgermasse 6 und jeweiligem Aufnahmemittel 5. Der Verbindungsabschnitt 12 jeder Elastomerfeder 8 ist außenseitig bezüglich des jeweiligen Aufnahmemittels 5 bzw. dessen Außenseite 42 angeordnet. Der jeweilige hohlzylindrische Verbindungsabschnitt 12 umgibt die Tilgermasse 6 umfangsseitig, wobei die Tilgermasse 6 zwischen ihrer jeweiligen Stirnseite und dem jeweiligen Aufnahmemittel 5 vollständig von der Elastomerfeder 8 überdeckt ist.

Der jeweilige Verbindungsabschnitt 12 ist hohlzylindrisch ausgestaltet, wobei er abschnittsweise einen sich vergrößernden Innendurchmesser in Richtung Außenseite 42 des jeweiligen Aufnahmemittels 5 aufweist. Dieser Abschnitt ist auch als Radialdistanzierungsabschnitt 16 bezeichenbar. In diesem Radialdistanzierungsabschnitt 16 vergrößert sich gleichsam auch der Außendurchmesser zur Beibehaltung einer gleichbleibenden Wandungsstärke. Der Radialdistanzierungsabschnitt 16 verläuft längsschnittlich verkippt zur Längsachse A.

Zur Kopplung an das Aufnahmemittel 5 umfasst jede Elastomerfeder 8 ein Kopplungsmittel, welches vorliegend als außenumfangsseitige Umfangsnut 18 ausgebildet ist. Das Kopplungsmittel ist in Radialrichtung R zwischen dem Aufnahmemittel 5 und der Tilgermasse 6 angeordnet, wobei der bezüglich der Umfangsnut 18 innenumfangsseitige Elastomerabschnitt als Radialanschlag für die Tilgermasse 6 dient. In die Umfangsnut 18 greift das Aufnahmemittel 5 per Aufnahmeauge 32 flanschartig und mit Ringabschnitt 33 ein.

Jede Elastomerfeder 8 weist einen ersten Flansch 20 auf, an dem das jeweilige Aufnahmemittel 5 anliegt. Der erste Flansch 20 weist eine sich in Richtung der Quermittelebene Q durchmesservergrößernde Seitenwand 22 auf. Das jeweilige Aufnahmemittel 5 weist im an der Seitenwand 22 anliegenden Anlagebereich 24 eine korrespondierende Kontur auf. Der erste Flansch 20 ist ein außenumfangsseitiger Ringflansch. Eine derart ausgestaltete Seitenwand 22 kann bei einer Axialverstellung der Tilgermasse 6 in Richtung des ersten Pfeils P1 die Elastomerfeder 8 derart verformen, dass der erste Flansch 20 nach radial innen in Richtung des zweiten Pfeils P2 gebogen wird, wo er einen Radialanschlag ausbildet und einen radialen Ausschlagweg der Tilgermasse 6 reduziert. Der erste Flansch 20 weist einen außenumfangsseitigen und ebenen Flachabschnitt 26 auf, der eine Radialerstreckung des ersten Flansches 20 gegenüber umfangsseitig benachbarten Abschnitten des ersten Flansches 20 reduziert.

Jede Elastomerfeder 8 weist zudem einen zweiten Flansch 28 auf, an dem das jeweilige Aufnahmemittel 5 ebenfalls anliegt, wobei der zweite Flansch 28 eine in Radialrichtung R verlaufende Seitenwand 44 aufweist, gegen welche sich das Aufnahmemittel 5 über den Ringabschnitt 33 in Längsrichtung L abstützt. Die Seitenwand 44 verläuft parallel zur Quermittelebene Q. Der zweite Flansch 28 ist ein außenumfangsseitiger Ringflansch. Erkennbar ist, dass die Umfangsnut 18 von dem ersten Flansch 20 und dem zweiten Flansch 28 ausgebildet und in Längsrichtung L begrenzt ist.

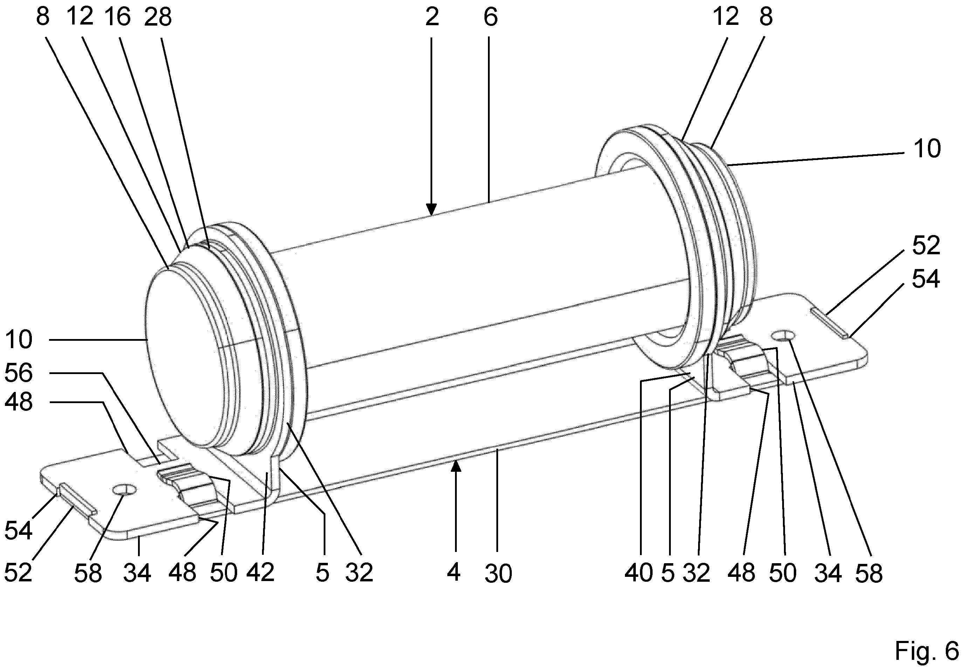

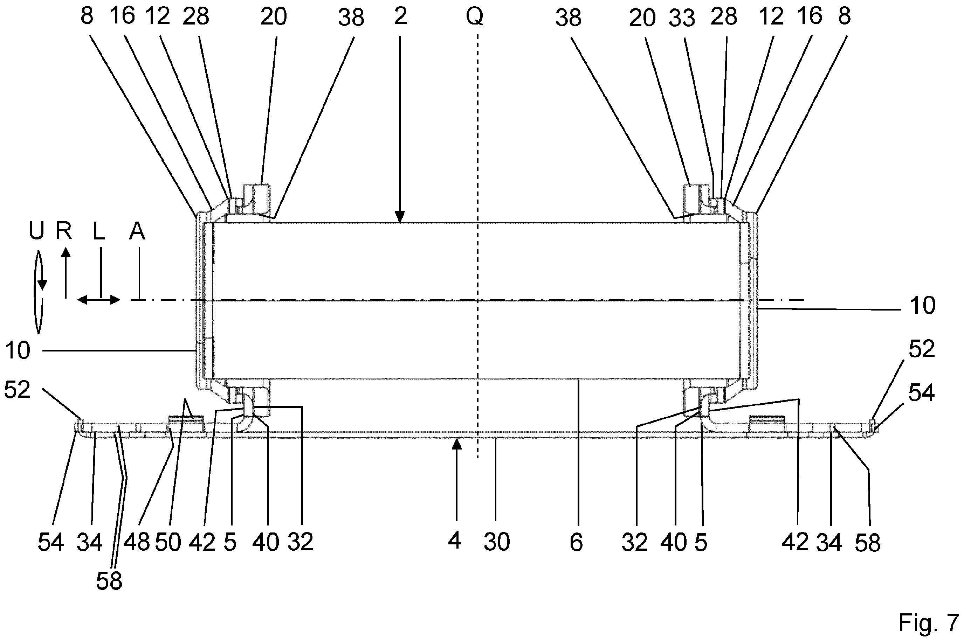

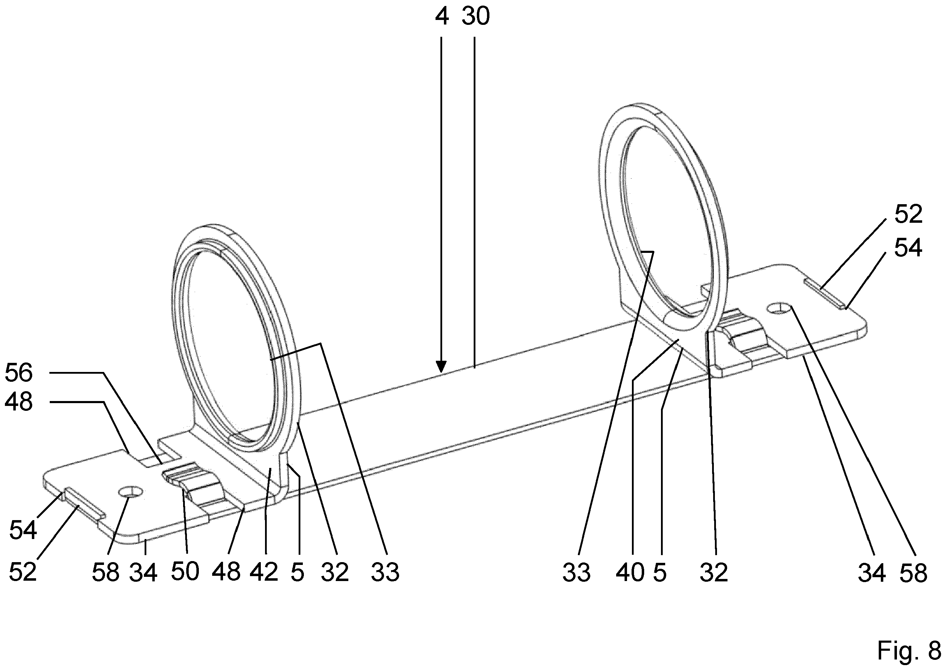

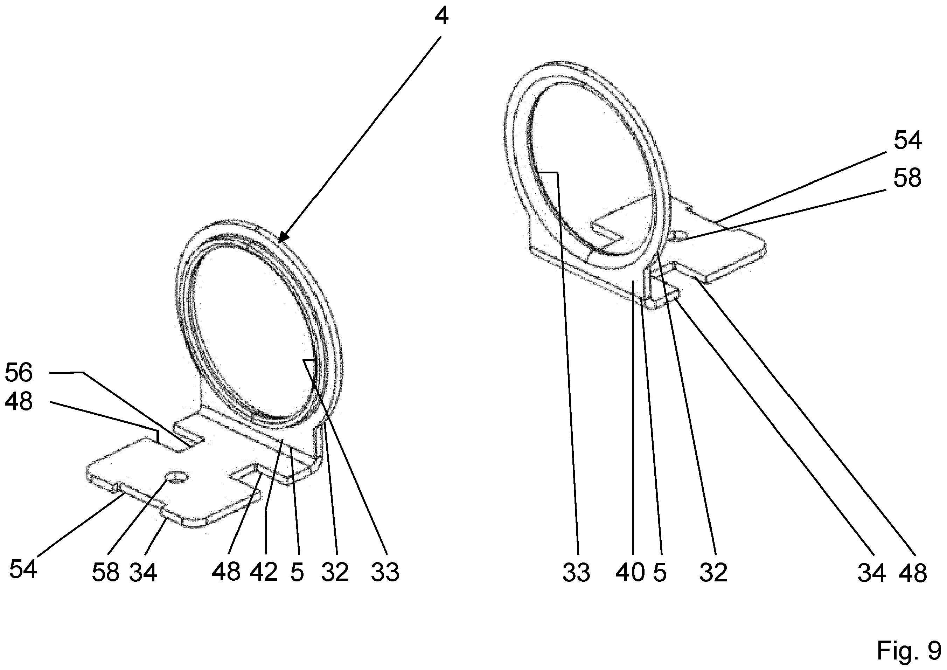

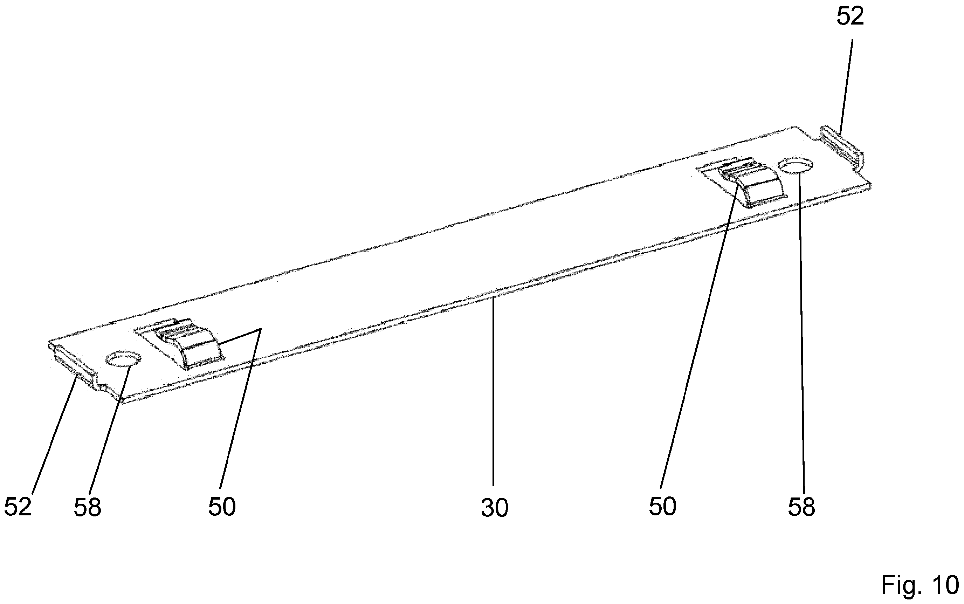

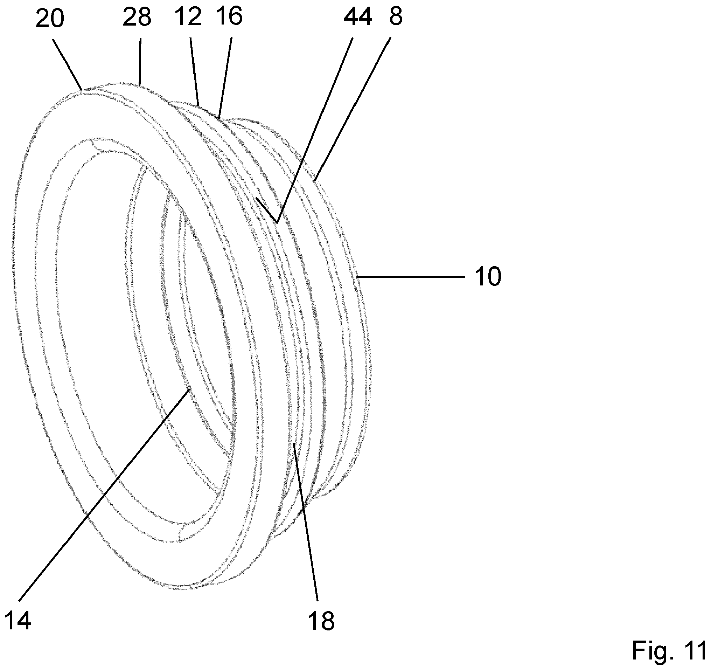

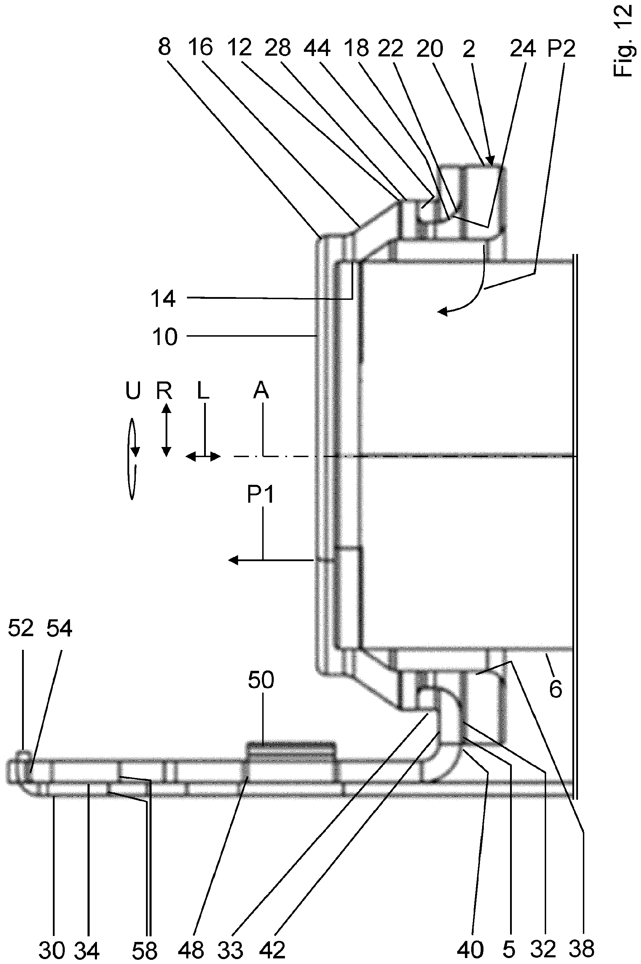

In den Fig. 6 bis 12 ist ein Schwingungstilger 2 im Vormontagezustand und dessen Bauteile gemäß einer zweiten Ausführungsform gezeigt. Um Wiederholungen zu vermeiden, sollen nachfolgend lediglich Unterschiede zur ersten Ausführungsform beschrieben werden.

Die Schenkel 34 weisen nun keine Axialanschlagslippe 36 auf, obgleich eine solche vorgesehen sein kann. Jeder Schenkel 34 umfasst zwei sich in Querrichtung bezüglich der Längsachse A erstreckende Klemmausnehmung 48. Die beiden Klemmausnehmung 48 eines Schenkels 34 fluchten miteinander und sind durch eine Klemmbrücke 56 voneinander getrennt. Die Klemmbrücke 56 ist von dem jeweiligen Schenkel 34 ausgebildet. Jeder Schenkel 34 umfasst zudem eine Rastausnehmung 54, wobei sich die Rastausnehmung 54 in Querrichtung bezüglich der Längsachse A erstreckt. Die beiden Schenkel 34 können um einen Winkel α gegenüber der Längsachse A verkippt sein, müssen es jedoch nicht.

Die Haltevorrichtung 4 umfasst nunmehr keine integrale Tragplatte 30, sondern eine separate Tragplatte 30, die mit den Schenkeln 34 verklemmt und verrastet ist. Die separate Tragplatte 30 liegt an den tilgermasseabgewandten Unterseiten der Schenkel 34 an und umfasst zwei sich in die Querrichtung und gleiche Richtung erstreckende Klemmlaschen 50. Jede der Klemmlaschen 50 ist durch eine jeweilige Klemmausnehmung 48 von der tilgermasseabgewandten Unterseite des jeweiligen Schenkels 34 zu einer tilgermassezugewandten Oberseite des jeweiligen Schenkels 34 geführt. Dort verklemmt jede Klemmlasche 50 mit einem Schenkel 34 bzw. mit dessen Klemmbrücke 56. Die separate Tragplatte 30 umfasst zudem jeweils endseitig eine Rastnase 52, welche sich in Querrichtung erstreckt. Jede Rastnase 52 verrastet mit der jeweiligen Rastausnehmung 54. Die Klemmlaschen 50 halten die Schenkel 34 und somit auch die Aufnahmemittel 5 an der separaten Tragplatte 30 und die Rastnasen 52 verhindern ein Verrutschen der Schenkel 34 und somit auch der Aufnahmemittel 5. Die Elastomerfedern 8 weisen keinen Flachabschnitt 26 auf, wobei dieser durchaus vorgesehen sein kann. In der Tragplatte 30 sind mit den Bohrungen 58 der Schenkel 34 fluchtende Bohrungen 58 ausgeführt.

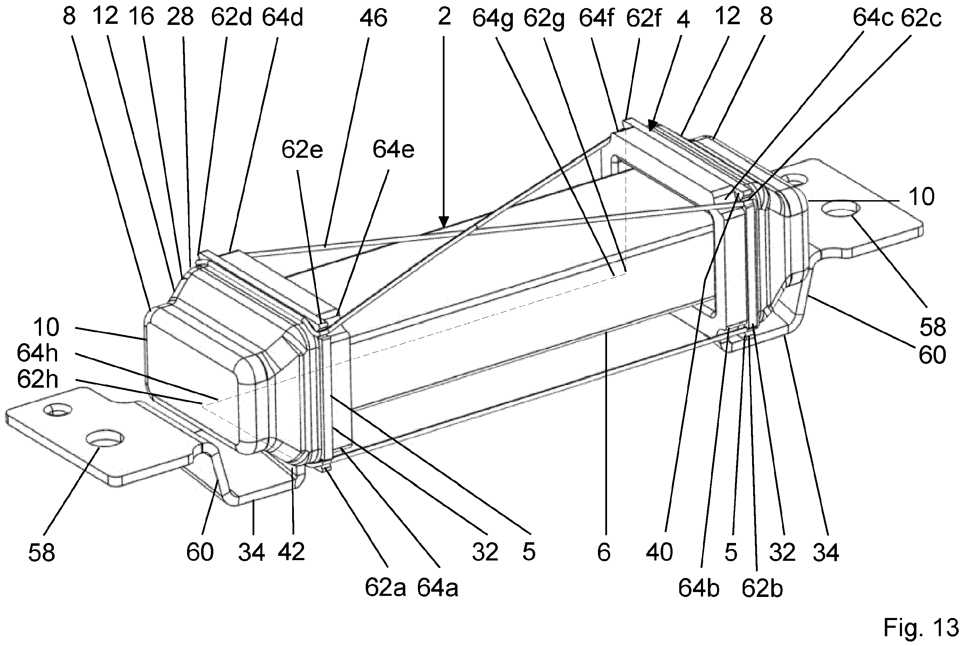

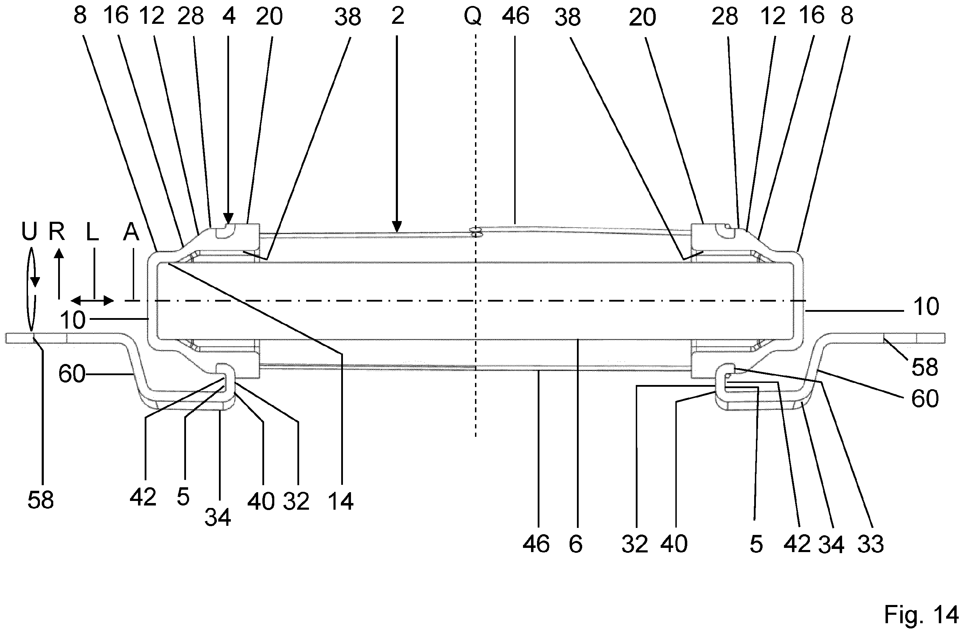

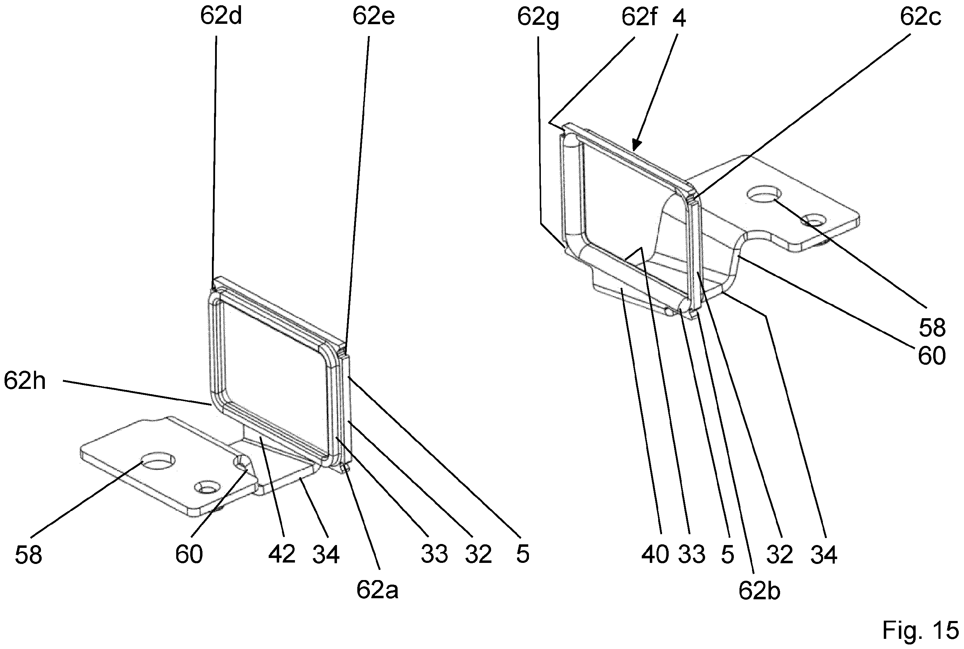

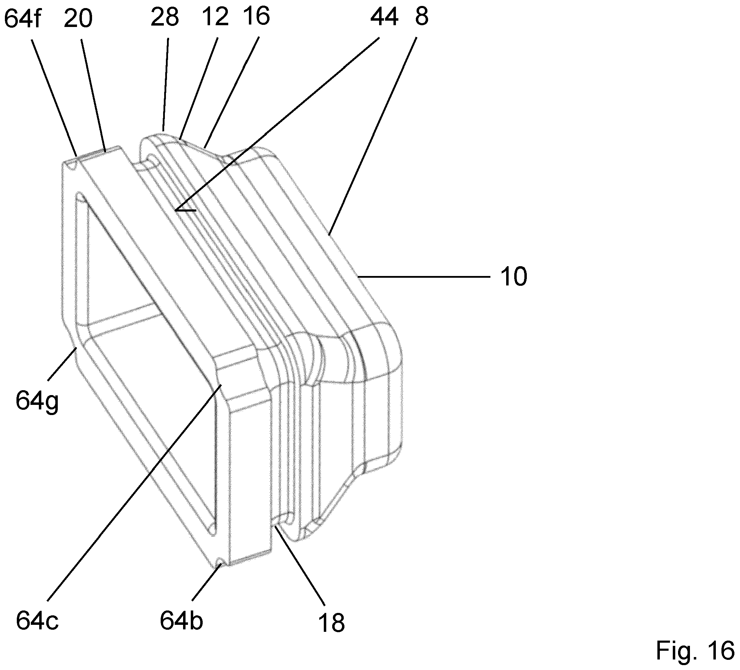

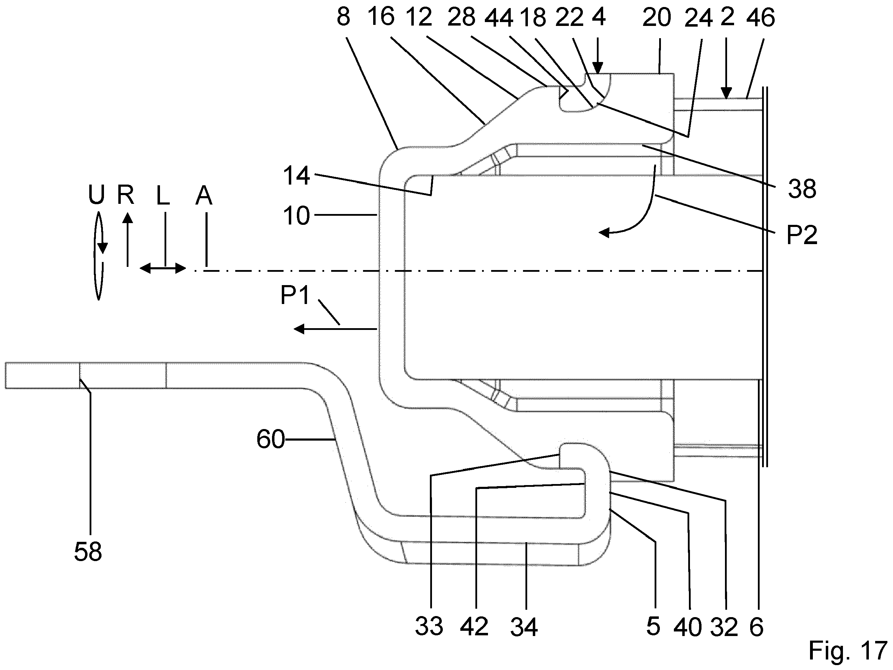

In den Fig. 13 bis 17 ist ein Schwingungstilger 2 im Vormontagezustand und dessen Bauteile gemäß einer dritten Ausführungsform gezeigt. Um Wiederholungen zu vermeiden, sollen nachfolgend lediglich Unterschiede zur ersten Ausführungsform beschrieben werden.

Die Schenkel 34 weisen nun anstelle von Axialanschlagslippen 36 jeweils eine Axialanschlagswand 60 auf. Diese entsteht dadurch, dass von dem Schenkel 34 die Axialanschlagswand 60 winklig abragt, vorzugsweise unter Aufspannung eines Winkels im Bereich von 100° bis 120°. Davon wiederum ragt ein Abschnitt ab, der die Bohrungen 58 umfasst.

Die Tilgermasse 6 ist nun als Quader ausgebildet, umfasst jedoch weiterhin ebene Stirnseiten. Gleichsam sind auch die Aufnahmeaugen 32 nun rechteckig, wobei die Tilgermasse 6 und die Aufnahmeaugen 32 derart aufeinander abgestimmt sind, dass sich die Tilgermasse 6 nicht sehr weit innerhalb der Aufnahmeaugen 32 um die Längsachse A drehen kann, sondern von den Aufnahmeaugen 32 darin beschränkt wird. Auch die beiden Elastomerfedern 8 sind nunmehr an die Quaderform der Tilgermasse 6 und die Rechteckform der Aufnahmeaugen 32 und der querschnittlich rechteckigen Aufnahmeaugeausnehmung angepasst und hohlquaderförmig ausgebildet. Gleiches gilt für den Flansch 33.

Die beiden Schenkel 34 oder Aufnahmemittel 5 sind nicht mit einer Tragplatte verbunden. Jedoch sind sie mittels eines Seils 46, das ein Ringseil ist, verspannt. Das Seil 46 ist in acht Führungsausnehmungen 62a-h der Aufnahmemittel 5 geführt, wobei es der Nachvollziehbarkeit halber in den verdeckten Bereichen strichliniert dargestellt ist. Der Verlauf des Seils 46 ist nun derart, dass es durch eine Führungsausnehmung 62a des einen Aufnahmemittels 5 in eine Führungsausnehmung 62b des anderen Aufnahmemittels 5 führt. Von dort aus wird es in der Bildebene aufwärts durch eine weitere Führungsausnehmung 62c und von dort aus zurück in das andere Aufnahmemittel 5 und dessen Führungsausnehmung 62d geführt. Ausgehend von dort verläuft es durch eine weitere Führungsausnehmung 62e und erneut in das andere Aufnahmemittel 5 und dessen Führungsausnehmung 62f. Die Verläufe des Seils 46 zwischen den Führungsausnehmungen 62c und 62d einerseits und den Führungsausnehmungen 62e und 62f kreuzen sich. Ausgehend von der Führungsausnehmung 62f wird das Seil 46 in der Bildebene abwärts geführt und durchläuft eine Führungsausnehmung 62g und eine Führungsausnehmung 62h. Erkennbar ist zudem, dass auch die Elastomerfedern 8 mit den jeweiligen Führungsausnehmungen 62a-h in Längsrichtung L fluchtende Führungsausnehmungen 64a-h aufweisen, durch welche das Seil 46 führt.

Im Folgenden wird die Funktionsweise des Schwingungstilgers 2 erläutert. Die Schwingungen eines mit dem Schwingungstilger 2 verbundenen Kraftfahrzeugteils werden über die Haltevorrichtung 4 und die Elastomerfedern 8 auf die Tilgermasse 6 übertragen. Dadurch wird die Tilgermasse 6 relativ zu der Haltevorrichtung 4 ausgelenkt und fängt an zu schwingen, wobei die Schwingungen über die beiden Elastomerfedern 8 bedämpft und so vom Fahrgastraum entkoppelt werden. Dadurch werden im Fahrgastraum keine von dem Kraftfahrzeugteil störenden Klappergeräusche wahrgenommen. Anstelle eines Stiftelements begrenzt die Tilgermasse 6 als Wegbegrenzungseinrichtung die eigene Auslenkung relativ zu der Haltevorrichtung 4, indem sie an die innerhalb der Aufnahmeaugen 32 angeordneten Elastomerfedern 8 anschlägt. Dadurch wird eine Überlastung der Elastomerfedern 8 aktiv verhindert, so dass der Schwingungstilger 2 eine lange Lebensdauer aufweist. Darüber hinaus dämpfen die innerhalb der Aufnahmeaugen 32 angeordneten Elastomerfedern 8 die beim Anschlagen der Tilgermasse 6 auftretenden Geräusche.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

| | | | |
|---|---|---|---|
| 2 | Schwingungstilger | A | Längsachse |
| 4 | Haltevorrichtung | L | Längsrichtung |
| 5 | Aufnahmemittel | Q | Quermittelebene |
| 6 | Tilgermasse | P1 | erster Pfeil |
| 8 | Elastomerfeder | P2 | zweiter Pfeil |
| 10 | Stirnseitenabschnitt | R | Radialrichtung |
| 12 | Verbindungsabschnitt | U | Umfangsrichtung |
| 14 | Umfangsseitenabschnitt | | |
| 16 | Radialdistanzierungsabschnitt | α | Winkel |
| 18 | Umfangsnut | | |
| 20 | erster Flansch | | |
| 22 | Seitenwand | | |
| 24 | Anlagebereich | | |
| 26 | Flachabschnitt | | |
| 28 | zweiter Flansch | | |
| 30 | Tragplatte | | |
| 32 | Aufnahmeauge | | |
| 33 | Ringabschnitt | | |
| 34 | Schenkel | | |
| 36 | Axialanschlagslippe | | |
| 38 | Freiraum | | |
| 40 | Innenseite | | |
| 42 | Außenseite | | |
| 44 | Seitenwand | | |
| 46 | Seil | | |
| 48 | Klemmausnehmung | | |
| 50 | Klemmlasche | | |
| 52 | Rastnase | | |
| 54 | Rastausnehmung | | |
| 56 | Klemmbrücke | | |
| 58 | Bohrung | | |
| 60 | Axialanschlagswand | | |
| 62a-h | Führungsausnehmung | | |
| 64a-h | Führungsausnehmung | | |

## Patentansprüche

1. Schwingungstilger zum Dämpfen von Schwingungen eines Kraftfahrzeugteils, der von einer Quermittelebene (Q) durchsetzt ist, mit einer an dem Kraftfahrzeugteil befestigbaren Haltevorrichtung (4), welche zumindest zwei Aufnahmemittel (5) aufweist, welche jeweils eine der Quermittelebene (Q) zugewandte Innenseite (40) und eine der Quermittelebene (Q) abgewandte Außenseite (42) aufweisen, einer Tilgermasse (6), die zentral von einer Längsachse (A) durchsetzt ist, und zumindest zwei Elastomerfedern (8), wobei die Elastomerfedern (8) die Tilgermasse (6) schwingfähig an die Aufnahmemittel (5) koppeln, **dadurch gekennzeichnet, dass** zumindest eine der Elastomerfedern (8) einen Verbindungsabschnitt (12) zwischen Tilgermasse (6) und jeweiligem Aufnahmemittel (5) aufweist, der zumindest überwiegend außenseitig bezüglich des jeweiligen Aufnahmemittels (5) verläuft.

2. Schwingungstilger nach Anspruch 1, **dadurch gekennzeichnet, dass** die Aufnahmemittel (5) jeweils als Aufnahmeauge (32) ausgebildet sind, wobei vorzugsweise die Tilgermasse (6) zumindest eines der Aufnahmeaugen (32) vorzugsweise beide, in Längsrichtung (L) unter Ausbildung einer Radialdistanz durch ragt.

3. Schwingungstilger nach einem der vorangehenden Ansprüche, **dadurch gekennzeichnet, dass** jede Elastomerfeder (8) einen Stirnseitenabschnitt (10) zum Anlegen an eine Stirnseite der Tilgermasse (6) und den davon in Richtung der Quermittelebene (Q) abragenden Verbindungsabschnitt (12) zum Koppeln mit dem jeweiligen Aufnahmemittel aufweist.

4. Schwingungstilger nach einem der vorangehenden Ansprüche, **dadurch gekennzeichnet, dass** jede Elastomerfeder (8) einen Umfangsseitenabschnitt (14) aufweist, der in Radialrichtung (R) umgebend zur Tilgermasse (6) angeordnet und/oder mit dieser verbunden ist.

5. Schwingungstilger nach einem der vorangehenden Ansprüche, **dadurch gekennzeichnet, dass** der Verbindungsabschnitt (12) zumindest abschnittsweise einen sich in Richtung Außenseite (42) des jeweiligen Aufnahmemittels (5) vergrößernden Innendurchmesser aufweist.

6. Schwingungstilger nach einem der vorangehenden Ansprüche, **dadurch gekennzeichnet, dass** der Verbindungsabschnitt (12) ein Kopplungsmittel, vorzugsweise eine Umfangsnut (18), zur Kopplung an das jeweilige Aufnahmemittel (5) aufweist, wobei vorzugsweise das Kopplungsmittel in Radialrichtung (R) zwischen dem Aufnahmemittel (5) und der Tilgermasse (6) angeordnet ist.

7. Schwingungstilger nach einem der vorangehenden Ansprüche, **dadurch gekennzeichnet, dass** jede Elastomerfeder (8) einen ersten Flansch (20) aufweist, an dem das jeweilige Aufnahmemittel (5) anliegt, wobei vorzugsweise der erste Flansch (20) eine sich in Richtung der Quermittelebene (Q) durchmesservergrößernde Seitenwand (22) aufweist und das jeweilige Aufnahmemittel (5) im an der Seitenwand (22) anliegenden Anlagebereich (24) eine korrespondierende Kontur aufweist.

8. Schwingungstilger nach Anspruch 7, **dadurch gekennzeichnet, dass** der erste Flansch (20) einen außenumfangsseitigen Flachabschnitt (26) aufweist, der eine Radialerstreckung des ersten Flansches gegenüber umfangsseitig benachbarten Abschnitten des ersten Flansches (20) reduziert.

9. Schwingungstilger nach einem der vorangehenden Ansprüche, **dadurch gekennzeichnet, dass** jede Elastomerfeder (8) einen zweiten Flansch (28) aufweist, an dem das jeweilige Aufnahmemittel (5) anliegt, wobei der zweite Flansch (28) eine in Radialrichtung (R) verlaufende Seitenwand (44) aufweist, gegen welche sich das Aufnahmemittel (5) in Längsrichtung (L) abstützt.

10. Schwingungstilger nach einem der vorangehenden Ansprüche, **dadurch gekennzeichnet, dass** die Haltevorrichtung (4)
- keine die Aufnahmemittel (5) miteinander verbindende Struktur oder
- eine Tragplatte (30) aufweist, welche die Aufnahmemittel (5) miteinander verbindet, wobei die Tragplatte (30) entweder integral mit den Aufnahmemitteln (5) ausgebildet oder separat ausgebildet und mit diesen verbunden ist, vorzugsweise mittels zumindest einer Form- und/oder Presspassung, oder
- zumindest ein Seil (46) aufweist, welches die Aufnahmemittel miteinander verspannt.

11. Schwingungstilger nach einem der vorangehenden Ansprüche, **dadurch gekennzeichnet, dass** zumindest an einem der Aufnahmemittel (5) ein in Längsrichtung (L) abragender Schenkel (34) angeordnet ist, der
- gegenüber der Längsachse (A) um einen Winkel (α) verkippt verläuft und/oder
- eine vom jeweiligen Schenkel (34) abragende Axialanschlagslippe (36) aufweist und/oder
- zumindest eine Klemmausnehmung (48) zum Einführen einer Klemmlasche (50) aufweist und/oder
- zumindest eine Rastausnehmung (54) zum Aufnehmen einer Rastnase (52) aufweist.
